# EUROPEAN PATENT APPLICATION

(11) **EP 4 745 028 A1**
(43) Date of publication of application: **20.05.2026**
(21) Application number: 25213443.2
(22) Date of filing: 04.11.2025
(51) Int. Cl.: B64C 3/56

(54) **LATCH MECHANISM**

(30) Priority: 14.11.2024 GB 202416746
(71) Applicant: Airbus Operations Limited, Bristol BS34 7PA (GB); Airbus Operations (S.A.S.), 31060 Toulouse Cedex 9 (FR)
(72) Inventor: MORRELL, Paul, Bristol, BS34 7PA (GB); MARKS, Oliver, Bristol, BS34 7PA (GB); OLDER, Russell, Bristol, BS34 7PA (GB); DELPONT, Jerome, 31060 Toulouse (FR)
(74) Representative: Hucker, Nerys

(57) **Abstract**

The invention relates to a latch mechanism 12 for locking an aircraft folding wing. The mechanism comprises at least one lug 13, 14 having an aperture 15a-15f and a latch pin 16 moveable within the aperture between a latched configuration in which the latch pin is received in the aperture, and an unlatched configuration in which the latch pin is withdrawn from the aperture. At least part of one of the pin 16 and the aperture 15a-15f has a hydrophobic coating. A hydrophobic coating may be applied to all apertures in the mechanism and/or to the latch pin. The provision of a hydrophobic coating helps to prevent the formation of moisture and hence ice on the latch pin and/or in the aperture, which ice can inhibit the pin from moving along the aperture into and out of its latching position.

## Description

### FIELD OF TECHNOLOGY

The present invention relates to a latch mechanism for locking an aircraft folding wing. The invention further relates to a latching system including such a latch mechanism; to an aircraft wing including a latch mechanism; and to an aircraft including a latch mechanism. The invention further relates to a method of manufacture of the latch mechanism.

### BACKGROUND

Civil aircraft design has evolved to address the increasing demand for larger and more efficient aircraft, which often necessitate larger wingspans. Folding wing tips have emerged as a compromise between large wingspans and airport gate compatibility. In a typical wing design, the wing comprises a fixed wing portion and a wing tip device at the tip of the fixed wing, the wing tip device being rotatable relative to the fixed wing between an extended configuration for use during flight, and a folded configuration for use during ground-based operations. By allowing the outer wing tips to fold relative to the fixed wings, the effective wingspan can be reduced to comply with gate and storage dimensions.

Known folding wings may have a releasable latch mechanism, comprising a latch pin having at least one latching bore or aperture in the form of a lug or bushing. The latch mechanism is configurable between a latched configuration, in which the latch pin is received in the latching aperture to lock the wing tip device in one of the flight or ground configurations; and an unlatched configuration in which the latch pin is withdrawn from the latching aperture such that the wing tip device is moveable from the one of the flight or ground configurations to the other of the ground and flight configurations respectively. Such a latch mechanism is arranged to ensure that each wing tip is locked firmly in place during flight, and to safely and efficiently release each wing tip for folding when the aircraft is on the ground.

A problem which may be encountered with conventional folding wing tip systems is that of the formation of ice on the components of the folding wing tip system. Ice formation is due to moisture from rain and other atmospheric conditions settling on components of the wing tip system and then freezing. Ice may be formed on the components at any stage of flight or ground operations, and even while the aircraft is parked. Such accumulation of ice can prevent proper operation of the latch mechanism by inhibiting movement of the latch pin between locked and unlocked positions. This can affect operation of the aircraft. For example, on landing, the aircraft may not be allowed to approach the gate if the wing cannot be folded. Similarly, the aircraft will be prevented from taking off if the wing cannot adopt the extended flight configuration.

### BRIEF SUMMARY OF THE TECHNOLOGY

A first aspect of the invention provides a latch mechanism comprising a lug having an aperture and a latch pin moveable within the aperture between a latched configuration in which the latch pin is received in the aperture, and an unlatched configuration in which the latch pin is withdrawn from the aperture, wherein at least part of one of the pin and the aperture has a hydrophobic coating. The provision of a hydrophobic coating helps to prevent the formation of moisture and hence ice on the latch pin and/or in the aperture, which ice can inhibit the pin from moving along the aperture into and out of its latching position.

Preferably, the latch mechanism further comprises a plurality of lugs having respective apertures, wherein at least some of the apertures have a hydrophobic coating. The or each aperture may take the form of a bushing.

Advantageously, both the pin and the aperture or apertures each has a hydrophobic coating.

Preferably, the hydrophobic coating includes wax. This may comprise a natural wax, such as carnauba wax and/or beeswax.

The hydrophobic coating may include carbon or diamond-like carbon. Such coatings are highly resilient and typically also have a low coefficient of friction.

Advantageously, the hydrophobic coating includes a pigment, so that wearing away of the coating may be ascertained by visual inspection of the latch mechanism.

The invention further provides a method of manufacture of a latch mechanism according to the first aspect of the invention, in which at least a portion of the hydrophobic coating is applied by brushing, spraying or dipping.

A third aspect of the invention provides a latching system arranged to control the configuration of the latch mechanism according to the first aspect of the invention, between a latched configuration and an unlatched configuration.

Preferably, the latching system includes an actuator arranged to move the latch pin between latched and unlatched configurations. Operation of the actuator may be controlled by a control unit.

A further aspect of the invention provides an aircraft wing comprising a fixed wing portion and a wing tip device moveable relative to the fixed wing between a flight configuration in which the wing has an extended position and a ground configuration in which the span of the wing is reduced, and further comprising a latch mechanism according to the first aspect of the invention, or to the latching system of the third aspect of the invention. The wing may form part of an aircraft.

### BRIEF DESCRIPTION OF THE DRAWINGS

The invention will now be described, by way of example, with reference to the accompanying drawings in which:
Figure 1a shows a perspective view of a swept wing of a passenger aircraft including a latch mechanism constructed according to the invention according to a first embodiment of the invention, in which a wing tip device of the wing is shown in a flight configuration (shown as a dotted line) and in a ground configuration (shown as a solid line);
Figure 1b shows a front view of the passenger aircraft of Figure 1a, in which the wing tip device is in the flight configuration;
Figure 2a is a sectional view of a latching system including the latch mechanism of the aircraft shown in Figures 1a and 1b, in a latched configuration;
Figure 2b is an axial view of the latch mechanism of Figure 2a, in a latched configuration;
Figure 3 is a sectional view of the latch mechanism of Figure 2a and 2b, in an unlatched configuration;
Figure 4 is a sectional view of a latch mechanism constructed according to an alternative embodiment of the invention; and
Figure 5 is a sectional view of a latch mechanism constructed according to a further embodiment of the invention.

### DETAILED DESCRIPTION OF EMBODIMENTS OF THE TECHNOLOGY

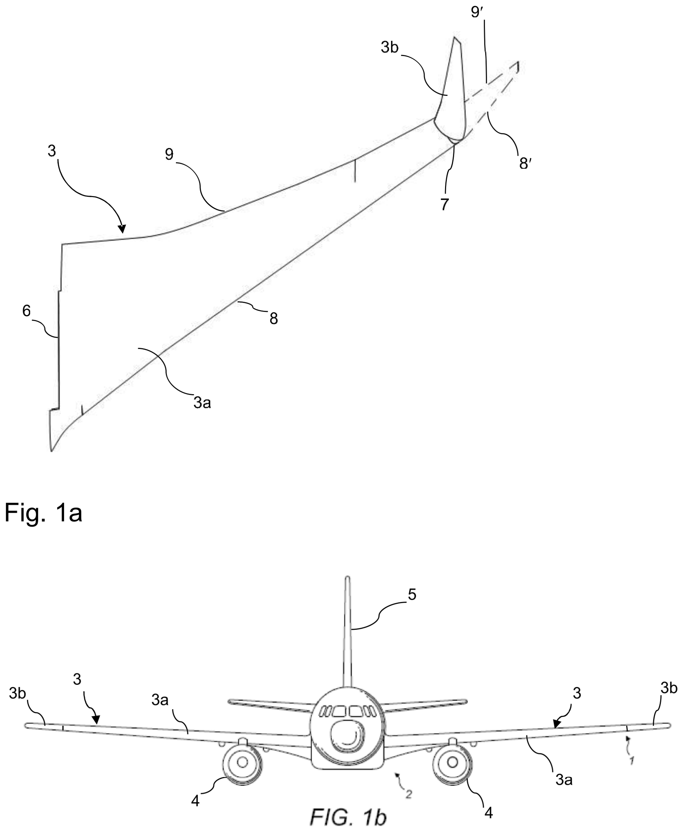

With reference to Figures 1a and 1b, an aircraft in the form of a typical commercial passenger aeroplane is shown and indicated generally by the reference numeral 1. The aeroplane 1 comprises a fuselage 2, wings 3, main engines 4 and a tail 5. It will be appreciated that this invention is applicable to a wide variety of aircraft types. For example, the aircraft may be for military purposes; may be for transporting passengers and/or cargo; may have jets, propellers or other propulsions systems; and may have any one of a variety of fuselage/wing configurations.

Each of the wings 3 comprises a fixed wing 3a and a wing tip device 3b. The fixed wing 3a extends outboard from the fuselage 2 of the aircraft, in a span wise direction from a root 6 to a tip 7. The fixed wing 3 also extends in a chord-wise direction from a leading edge 8 to a trailing edge 9.

The wing tip device 3b is located at the outboard tip of the fixed wing 3a. In the described embodiment the wing tip device 3a is in the form of a planar wing tip extension, although the invention is also applicable to other types of wing tip device, such as a wing tip fence, a swept wing tip, a split wing tip, a non-planar wing tip device such as a winglet, etc.

The wing tip device 3b is moveable between a flight configuration shown in Figure 1b (and also shown as a broken line in Figure 1a) and a ground configuration (shown as a solid line in Figure 1a). When the wing tip device 3a is in the flight configuration it extends outboard in a span wise direction. The wing tip device 3a also extends in a chord-wise direction from a leading edge 8' to a trailing edge 9'. In the flight configuration, the leading and trailing edges 8', 9' of the wing tip device 3b are continuations of the leading and trailing edges 8, 9 of the fixed wing 3a. Furthermore, the upper and lower surfaces of the wing tip device 3b are continuations of the upper and lower surfaces of the fixed wing 3a. Thus, there is a smooth transition from the fixed wing 3a to the wing tip device 3b.

The position of the wing tip device 3b may be controlled so as to assume a flight configuration for flight. In the flight configuration the wing tip device 3b increases the span of the aircraft wing, thereby providing beneficial aerodynamic effects, such as reducing the component of induced drag and increasing the lift. In principle, it would be possible to maintain this large span at all times and simply have a large fixed wing. However, the maximum aircraft span is effectively limited by airport operating rules which govern various clearances required when manoeuvring around the airport (such as the span and/or ground clearance required for gate entry and safe taxiway usage). In this regard, in the flight configuration the wing span may exceed an airport compatibility gate limit. Thus, the wing tip device 3b is moveable to the ground configuration for use when the aircraft 1 is on the ground.

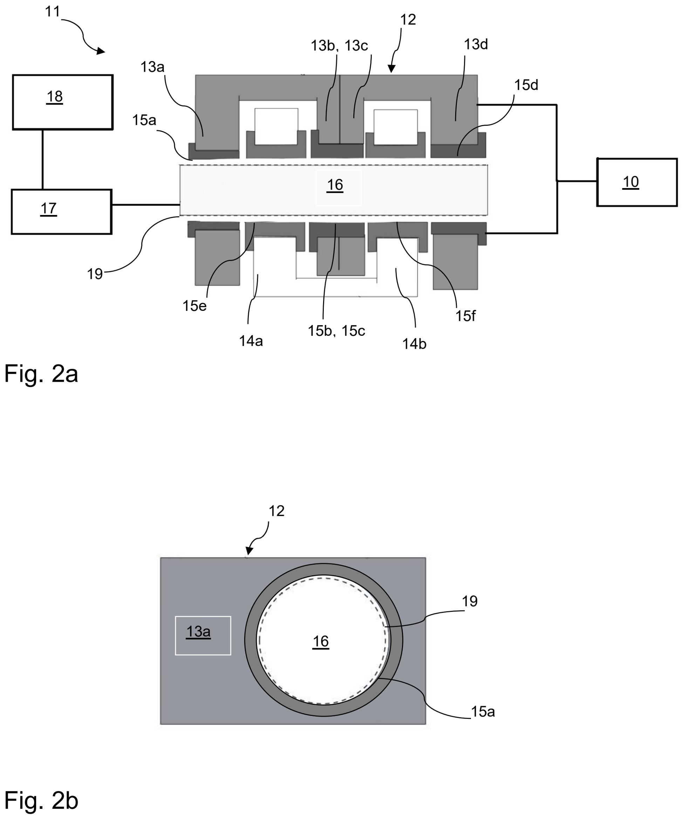

In the ground configuration the wing tip device 3b is folded from the above-mentioned flight configuration, such that the wing tip device 3b is rotated upwardly. When the wing tip device 3b is in the ground configuration, the span of the wing 3 is reduced. In order to effect movement of the wing tip device 3b between the flight and ground configurations, a rotational joint 10 (shown schematically as box 10 in Figure 2a) is provided. The rotational joint 10 rotatably couples the wing tip device 3b to the fixed wing 3a, to allow the wing tip device 3b to rotate between the flight and ground configurations. An example of a wing tip device 3b that is rotatable in this manner is shown in WO 2015/150835 (Airbus Operations Ltd), the contents of which are herein incorporated by reference.

The aircraft wing 3 further comprises a latching system **11** that is configured to selectively lock the wing tip device 3b in both the flight configuration and the ground configuration. The latching system **11** includes a latch mechanism 12 constructed according to the invention, and is shown schematically in Figure 2a.

The latch mechanism 12 comprises a first set 13 of bushings or lugs, in this case four lugs 13a, 13b, 13c, 13d, arranged into two adjacent pairs, that are fixedly attached to a part of the outboard end of the wing box of the fixed wing 3a. The latch mechanism further comprises a second set 14 of lugs, in this case two lugs 14a, 14b, that are arranged as a pair and fixedly attached to a part of the inboard end of the wing tip device 3b so that the lugs 14a, 14b can rotate about a hinge line (not shown) as the wing tip device 3b moves between the ground and flight configurations.

Each of the lugs 13a, 13b, 13c, 13d, 14a, 14b includes a generally circular bore or aperture 15a, 15b, 15c, 15d, 15e, 15f respectively extending through the thickness of the respective lug. The sets 13, 14 of lugs are arranged so that the lugs are interleaved and the apertures 15a-15f of the lugs are aligned to form collectively a bore or aperture 15 for movement of a latch pin 16 between latched and unlatched configurations.

**In** these embodiments, the apertures 15a-15f are shown in the form of bushings inserted into the lugs, with one bushing being used to pair together the apertures 15b and 15c of the adjacent lugs 13b, 13c. The apertures 15a-15f may alternatively take the form of bearings or other cylindrical linings, or may simply be holes in the lugs.

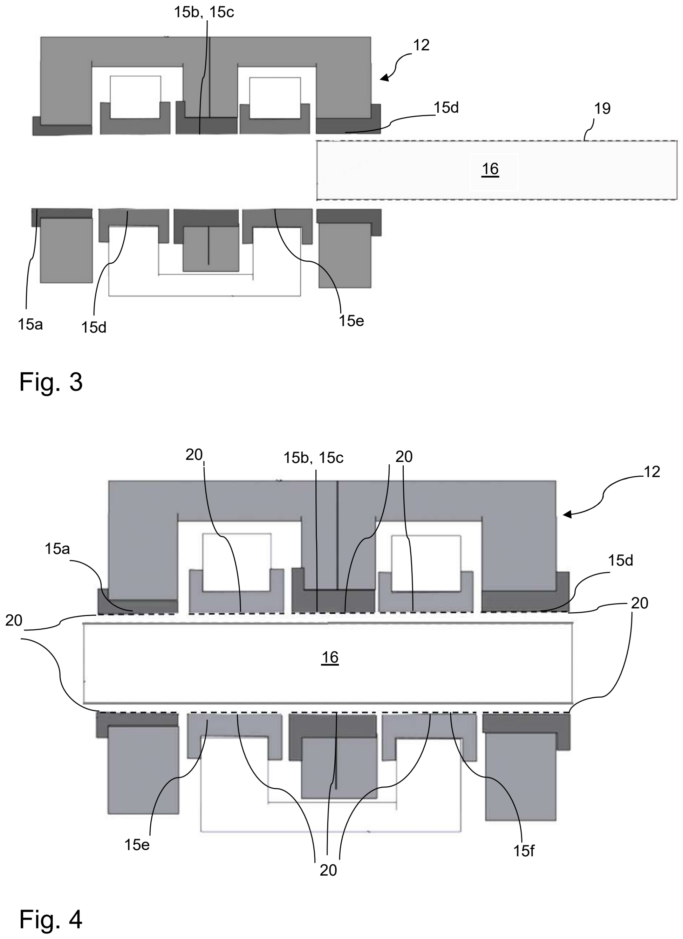

The latch pin 16 is substantially cylindrical, that is to say it has a substantially constant diameter along its length. The pin 16 is mounted on a support structure (not shown in these drawings), for sliding reciprocal movement between a latched position (shown in Figures 2a and 2b) and an unlatched position (shown in Figure 3).

The latching system **11** includes an actuator 17, connected to the latch pin 16 so as to move the pin between its latched and unlatched positions. The actuator 17 may be an electromechanical actuator in the form of a solenoid, for example, or any other suitable type of actuator, such as a mechanical, pneumatic or electrical actuator. The latching system **11** also comprises a control unit 18 arranged to control the operation of the actuator 17. The control unit 18 may be connected, at an input, to a pilot-operable control that a pilot operates to lock the wing tip device 3a. Alternatively, the control unit 18 may be configured automatically to lock the wing tip device in the desired configuration.

When the latch pin 16 is in the unlatched position of Figure 3, one end portion of the pin is located in the aperture 15d of the endmost lug 13d of the fixed wing 3a. **In** this position, the pin does not protrude into the aperture 15f of the adjacent lug 14b that is attached to the wing tip device 3b, and so the wing tip device is free to move between its flight and ground configurations.

It will be noticed that there is a small gap between the outer surface of the latch pin 16 and the surfaces of the apertures 15a-15f of the lugs 13, 14. **It** has been found that ice can form in this region. Accumulation of ice can prevent proper operation of the latch mechanism 12 and hence the aircraft 1 by hindering movement of the latch pin 16 between the latched and unlatched configurations. If the latch mechanism 12 is iced up, then the wing 3 may not be able to move from the extended to the folded configuration on landing, so that the aircraft 1 will not be allowed to approach the gate. Similarly, take off of the aircraft 1 may be delayed if the accumulation of ice prevents the latch pin 16 of the latch mechanism 12 from being unlatched so that the wing can be unfolded and adopt the extended configuration for flight.

**In** accordance with the invention, at least part of the latch mechanism 12 has a hydrophobic coating 19. **In** the embodiment shown in Figures 2a, 2b and 3, a hydrophobic coating 19 covers the entire outer cylindrical surface of the latch pin 16. Of course, the coating could be applied only to selected areas of the pin 16. The hydrophobic coating 19 is represented by a broken line on the surface of the pin 16.

A hydrophobic coating is a thin layer of material that repels water. These coatings cause water droplets simply to 'bead up' and roll off. The way in which a water droplet interacts with a surface determines whether it is hydrophobic. This is measured by the static contact angle between the surface and a drop of liquid. The higher the contact angle the higher the hydrophobicity of a surface. A surface can be said to be "hydrophilic" when the water contact angle is less than 90°; "hydrophobic" when the water contact angle is greater than 90°; and "super hydrophobic" when the water contact angle is greater than 150°. The coating 19 of the latch mechanism may be hydrophobic or super-hydrophobic: use of the term "hydrophobic" in this specification is intended to encompass materials having hydrophobic or super-hydrophobic properties.

Examples of materials suitable for forming the hydrophobic coating 19 are polymers such as polytetrafluoroethylene (PTFE), silicon-based compounds, ceramics, waxes and oils. Carbon coatings and diamond-like carbon coatings (DLCs) may also be employed. A DLC is formed when ionised carbon is made to impact a surface at high energy. The resulting coating is hydrophobic, has excellent resistance to abrasion and corrosion, as well as having a low coefficient of friction.

Natural waxes such as carnauba wax, beeswax or paraffin are particularly suitable for the present invention as they are natural materials, easy to source and apply and have a low environmental impact. Waxes suitable for the present invention are solid at the operating temperatures of the aircraft and can soften when heated. The waxes employed in the present invention are preferably insoluble in water. Other waxes, such as animal waxes, vegetable waxes, mineral waxes, and petroleum waxes, as well as synthetic waxes, may be used. A blend of hydrophobic materials may be employed, for example a mixture of beeswax and carnauba wax.

The hydrophobic coating 19 may be applied to the latch pin 16 by a variety of methods. For example, the selected hydrophobic material, or mixture of materials, may be warmed to a liquid phase or else just softened, and then simply brushed or wiped onto the latch pin 16. Other suitable forms of application include spray coating, slot die coating, dip coating and any other method that is capable of depositing a thin film, such as chemical vapour deposition (CVD) or physical vapour deposition (PVD), in dependence on the type of coating selected. The coating material may be in the form of a powder or paint. Several layers of coating may be applied to the pin 16.

During servicing of the aircraft **1,** ground crew may easily re-apply the hydrophobic coating 19 after a period of wear. The coating mixture may include pigments so that the hydrophobic coating 19 is coloured; thus, wear of the coating may be determined by a simple visual inspection of the latch mechanism 12.

The provision of a hydrophobic coating prevents ice from forming on the latch pin. Moisture may be inhibited from settling on the pin such that it is unlikely to stay in place on the pin long enough to freeze. If ice does form, then the surface structure of the hydrophobic coating reduces the contact area of the ice to the extent that operation of the latch is not impeded. Furthermore, the hydrophobic coating 19 reduces the ice adhesion strength, so that the ice may be more easily removed than was possible hitherto.

The hydrophobic coating 19 also provides a protective barrier against moisture ingress, thereby reducing corrosion of the latch pin 16 and other damage and degradation caused by water and other chemical contact with the pin.

It has also been found that moisture can attract dirt and debris. By inhibiting moisture from settling on the latch pin 16, it can be kept relatively free of dirt. Accumulated dirt and debris can prevent operation of the latch mechanism 12. Furthermore, as the water beads up and rolls off the latch pin 16 it carries away dirt and contaminants, so that the latch mechanism 12 becomes self-cleaning.

An alternative embodiment of the invention is shown in Figure 4. **In** this embodiment, it is the apertures 15a-15f of the lugs 13, 14 of the latch mechanism 12 that have a hydrophobic coating 20. **In** this drawing, all of the apertures 15a-15f are shown as having the hydrophobic coating 20 but, of course, the coating may be applied to only selected ones of the apertures, if desired. Different coatings may be employed for different ones of the apertures 15a-15f. The hydrophobic material may be one of the aforementioned types of coating. The coating may be applied (and re-applied during servicing) by simply brushing it into the apertures of the lugs 13, 14, or by any of the other methods mentioned above in relation to coating the latch pin 16.

The provision of a hydrophobic coating in some or all of the apertures 15a-15f has the benefits described above, namely impeding the formation of ice and reducing its adhesion on the lugs 13, 14, as well as inhibiting moisture ingress and accumulation of dirt and debris in the apertures 15a-15f. Thus, the latch pin 16 may slide easily through the apertures 15 as it moves between the latched and unlatched configurations and hence operation of the aircraft between the folded and extended wing configurations is facilitated.

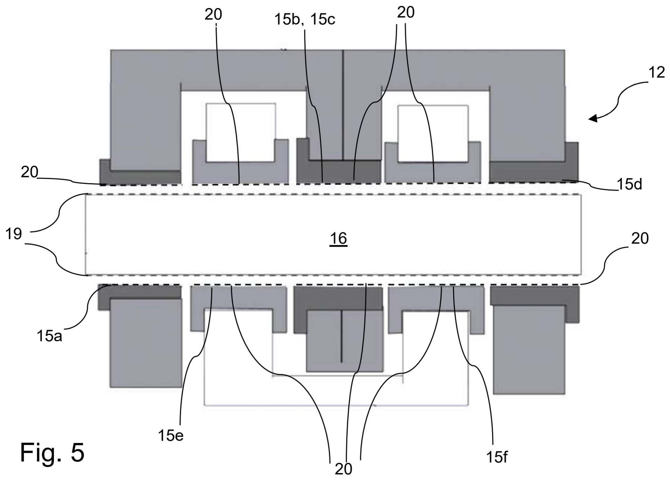

A further alternative embodiment of the invention is shown in Figure 5. **In** this embodiment, both the latch pin 16 and the apertures 15a-15f have a hydrophobic coating 19, 20 respectively. The hydrophobic coating 19 for the latch pin 16 may be same as the hydrophobic coating 20 on the apertures 15a-15f, or they may have coatings of different hydrophobic materials or mixtures. The or each hydrophobic material may include one of the types of coating mentioned above in relation to coating the latch pin 16 only. The coatings may be applied by any of the methods mentioned above, or a combination of methods for the different components.

The provision of coatings on both the latch pin 16 and the apertures 15a-15f includes the aforementioned benefits, and may also help to further lubricate movement of the latch pin 16 through the apertures 15 as it moves into and out of its latched configuration. The hydrophobic coatings 19, 20 are sufficiently thin so as not to cause appreciable changes in the overall dimensions of the components of the latch mechanism 12.

Further variations may be made without departing from the scope of the invention. For example, the hydrophobic coating may include one or more additives, such as nonfibrous reinforcements, elastomers and/or lubricants. The hydrophobic coating may have microtextured or nanotextured surfaces that further reduce water contact and promote droplet rolling. Further variations of the invention will be apparent to the person skilled in the art.

## Claims

1. A latch mechanism for latching a wing tip of an aircraft folding wing, the mechanism comprising a lug having an aperture and a latch pin moveable within the aperture between a latched configuration in which the latch pin is received in the aperture, and an unlatched configuration in which the latch pin is withdrawn from the aperture, wherein at least part of one of the pin and the aperture has a hydrophobic coating.

2. A latch mechanism as claimed in claim 1, further comprising a plurality of lugs having respective apertures, wherein at least some of the apertures have a hydrophobic coating.

3. A latch mechanism as claimed in claim 1 or claim 2, in which both the pin and the aperture or apertures each has a hydrophobic coating.

4. A latch mechanism as claimed in claim **1,** 2 or 3, in which the hydrophobic coating includes wax.

5. A latch mechanism as claimed in claim 4, in which the wax comprises a natural wax.

6. A latch mechanism as claimed in claim 5, in which the wax includes carnauba wax.

7. A latch mechanism as claimed in claim 5 or 6, in which the wax includes beeswax.

8. A latch mechanism as claimed in any one of claims **1,** 2, or 3, in which the hydrophobic coating comprises carbon or diamond-like carbon.

9. A latch mechanism as claimed in any preceding claim, in which the hydrophobic coating includes a pigment.

10. A method of manufacture of the latch mechanism as claimed in any preceding claim, in which at least a portion of the hydrophobic coating is applied by brushing, spraying or dipping.

11. A latching system arranged to control the configuration of a latch mechanism as claimed in any one of claims 1 to 9, between a latched configuration and an unlatched configuration.

12. A latching system as claimed in claim 11, further comprising an actuator arranged to move the latch pin between latched and unlatched configurations.

13. A latching system as claimed in claim 12, further comprising a control unit arranged to control operation of the actuator.

14. An aircraft wing comprising a fixed wing portion and a wing tip device moveable relative to the fixed wing between a flight configuration in which the wing has an extended position and a ground configuration in which the span of the wing is reduced, and further comprising a latch mechanism as claimed in any one of claims 1 to 9, or a latching system as claimed in any one of claims 11 to 13.

15. An aircraft including an aircraft wing as claimed in claim 14.
